# EUROPEAN PATENT SPECIFICATION

(11) **EP 1 666 786 B1**
(45) Date of publication and mention of the grant of the patent: **05.03.2008**
(21) Application number: 05111194.6
(22) Date of filing: 23.11.2005
(51) Int. Cl.: F16N 3/12, B25F 5/00

(54) **Grease Gun**
Fettpresse
Pistolet à graisse

(30) Priority: 24.11.2004 US 630865 P
(43) Date of publication of application: 07.06.2006
(73) Proprietor: Lincoln Industrial Corporation, St Louis, Missouri 63120-1578 (US)
(72) Inventor: Grach, Ayzik, 63120, St Louis, MO (US); Alekseyev, Viktor V., 63120, St. Louis, MO (US); Holland, Christopher, 63120, St. Louis, MO (US); Conley, Paul, 63120, St. Louis, MO (US)
(74) Representative: Smaggasgale, Gillian Helen

(56) References cited:
- EP-A- 0 302 229
- GB-A- 2 396 390
- US-A- 5 339 908
- US-A- 5 550 416
- US-A- 5 556 009
- US-A- 5 624 000
- US-A- 6 135 327

## Description

### BACKGROUND OF THE INVENTION

This invention relates generally to systems for dispensing viscous fluids, and in particular to an improved lubricator for delivering grease to machines requiring lubrication.

Hand-held powered lubricators, commonly referred to as "grease guns," have widespread use for servicing bearings and other components of vehicles, farming equipment, and industrial machines. A grease gun typically includes a pump having a reciprocal plunger, a reservoir of grease, a discharge hose, and an electric motor which drives the pump. The motor is powered through an electrical cord or, for a cordless gun, by a battery. A transmission is positioned between the motor and plunger with a system of gears that transforms rotational motion of the motor into linear reciprocal motion of the plunger. The transmission also reduces the motor's rotational cyclical frequency to a lower, corresponding plunger reciprocal frequency. Typically, the reduction is fixed at a constant ratio. Consequently, the grease gun discharges lubricant generally at a uniform pressure and volumetric output rate. A grease gun of this type is in U.S. Patent No. 6,135,327.

Periodically there is a to deliver lubricant from a grease gun to a grease fitting at a relatively higher pressure. For example, the fitting may be clogged with foreign material which must be broken up, or the fitting may communicate with a region having high back pressure, or the lubricant may have relatively higher viscosity. For these situations, the pressure at which lubricant is delivered is of greater importance than the rate at which lubricant is delivered. On the other hand, when the fitting is free of foreign obstructions, and/or the back pressure is relatively lower, and/or the lubricant has lower viscosity, the rate of volumetric discharge is more important so that lubricant may be more rapidly dispensed. Unfortunately, the transmissions of conventional grease guns are not adjustable to alter lubricant pressure and/or output to accommodate different fitting conditions.

Another drawback is that grease guns can be operated inefficiently when an operator is unsure of the quantity of lubricant dispensed. Because there is no visual indication of the number of pump cycles (i.e., reciprocations of the plunger), the operator must estimate whether a correct quantity of grease has been dispensed to a fitting. Often, the operator misjudges and a bearing is either under or over-lubricated, which is detrimental to operation and durability. The grease gun is also prone to damage should the motor overheat, such as due to a clogged fitting or an over-pressure condition inside the pump.

### SUMMARY OF THE INVENTION

Among the several objects and features of one embodiment of the present invention may be noted the provision of at least one embodiment of a grease gun which delivers lubricant with a selectable variation in pressure and/or output; the provision of at least one embodiment of such a grease gun which provides an indication corresponding to a quantity of lubricant dispensed; the provision of at least embodiment of such a grease gun which inhibits damage to the grease gun due to an over-pressure condition; the provision of at least one embodiment of such a grease gun which inhibits damage to the grease gun due to an electrical overload; and the provision of at least one embodiment of such a grease gun which is economical and operationally efficient.

In general, a device to the present invention is for viscous fluid (e.g., lubricant). The device comprises a reservoir holding a supply of the viscous fluid, and a pump adjacent the reservoir having a reciprocating plunger for pumping the fluid from the reservoir toward a discharge. An electric motor is provided for driving the pump, the motor having an output shaft. A variable speed transmission is coupled between the motor output shaft and the plunger for transmitting power from the motor to the pump. The transmission has at least two different output speed settings adapted to be selected for reciprocating the plunger at different cyclical frequencies.

In another aspect, a method according to the present invention is for dispensing a viscous fluid at a selectable rate of discharge. The method comprises the steps of providing a supply of the viscous fluid to a pump with a reciprocal plunger for pumping the fluid from the supply toward an outlet, and operating an electric motor having a variable transmission at a first speed so that plunger reciprocates at a first cyclical frequency and dispenses fluid at a first rate of discharge. The method further comprises the steps of changing an adjustable setting on the variable speed transmission and operating the electric motor at a second speed setting so that the plunger reciprocates at a second cyclical frequency and dispenses the fluid at a second rate of discharge different than the first rate.

in yet another aspect, a device of the present invention is for a viscous fluid. The device comprises a reservoir holding a supply of the viscous fluid, and a pump adjacent the reservoir having a reciprocating plunger for pumping the fluid from the reservoir toward a discharge, each stroke of the plunger pumping a quantity of fluid. An electric motor is provided for driving the pump, the motor having an output shaft. A transmission is coupled between the motor output shaft and the plunger for transmitting power from the motor to the pump. A stroke indicator provides an indication corresponding to a number of plunger strokes.

In still a further aspect, a device of the invention is for dispensing a viscous fluid. The device comprises a reservoir holding a supply of the viscous fluid, and a pump adjacent the reservoir having a bore and a plunger which reciprocates in the bore for pumping the fluid from the reservoir toward a discharge. An electric motor is provided for driving the pump, the motor having an output shaft. A transmission is coupled between the motor output shaft and the plunger for transmitting power from the motor to the pump. A pressure relief valve is provided for preventing damage due to excessive pressure in the bore. The valve communicates with the bore and is configured to open when pressure in the bore exceeds a predetermined level, thereby permitting fluid to exit the bore and thereby relieve pressure in the bore.

In one more aspect, a grease gun of the invention is for dispensing lubricant at two different speeds. The grease gun comprises a reservoir holding a supply of the lubricant, a pump adjacent the reservoir having a reciprocating plunger for pumping the lubricant from reservoir toward a discharge, and an electric motor driving the pump, the motor an output shaft. A variable speed is coupled between the motor output shaft and the plunger for transmitting power from the motor to the pump. The transmission has first and second output speed settings adapted to be selected for reciprocating plunger at different cyclical frequencies. The transmission is changeable between the first speed at which the plunger reciprocates at a first cyclical frequency, and the second setting at which plunger reciprocates at a second cyclical frequency. The transmission comprises three of gears. At the first speed setting, three of the transmission are active, and at the second speed setting, only two stages of the transmission are active.

Other objects and features of the present invention will be in part apparent and in part pointed out hereinafter.

### BRIEF DESCRIPTION OF THE DRAWINGS

FIG. 1 is a side elevation of a grease gun of the present invention;

FIG. 2 is a fragmentary side elevation of the grease gun with an outer cover removed to show interior components;

FIG. 3 is an end elevation of the grease gun with a portion in section;

FIG. 4 is an exploded perspective of a transmission of the grease gun;

FIG. 5 is a fragmentary vertical section taken along line 5--5 of Fig. 3;

FIG. 6 is a vertical section of the transmission casing;

FIG. 7 is a horizontal section taken along line 7--7 of Fig. 5 and showing a first stage of transmission gears;

FIG. 8 is a horizontal section taken along line 8--8 of Fig. 5 and showing a second stage of transmission gears;

FIG. 9 is a horizontal section taken along line 9--9 of Fig. 5 and showing a third stage of transmission gears;

FIG. 10 is an enlarged portion of Fig. 5 showing a pressure relief valve of the grease gun;

FIG. 10A is a section taken along line 10A-10A of Fig. 10;

FIGS. 11 and 12 are vertical sections showing the transmission at low speed and high speed settings, respectively;

FIG. 13 is a perspective of the transmission;

FIG. 14 is an exploded perspective of a first stage of the transmission;

FIG. 15 is an exploded perspective of a second stage of the transmission;

FIG. 16 is an exploded perspective of a third stage of the transmission and a final driver;

FIG. 17 is a view taken along line 17--17 of Fig. 2;

FIG. 18 is a side elevation of a second embodiment of the grease gun;

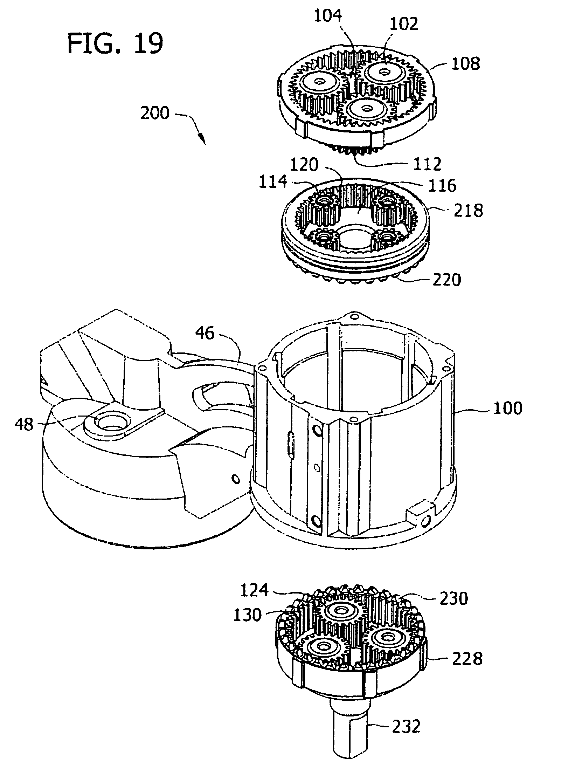

FIG. 19 is an exploded perspective of a portion of the second embodiment shown in Fig. 18;

FIGS. 20A and 20B are perspectives of the transmission of the gun of Fig. 18 at low and high speed settings, respectively;

FIG. 21 is a fragmentary vertical section of the grease gun of Fig. 18; and

FIG. 22 is a fragmentary view similar to Fig. 17 but showing another variation having rollers for movement of a yoke.

Corresponding reference characters indicate corresponding parts throughout the views of the drawings.

### DETAILED DESCRIPTION OF THE PREFERRED EMBODIMENT

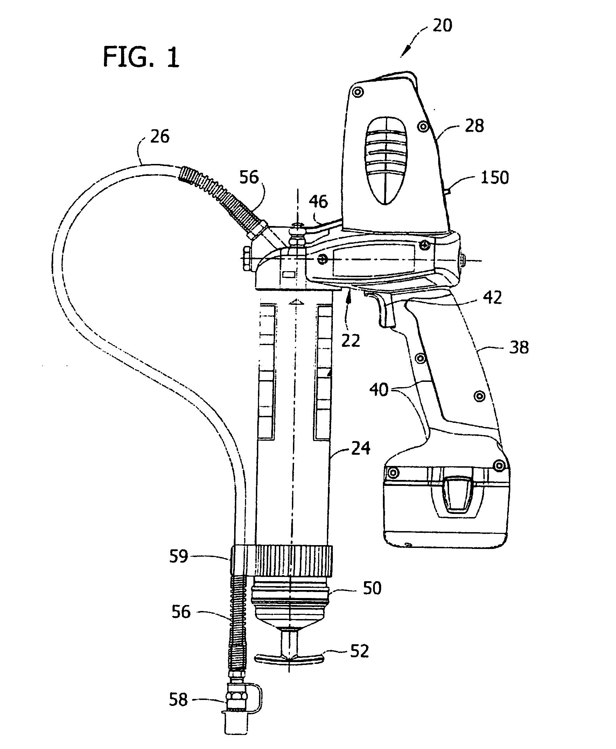

Referring now to the drawings and in particular to Fig. 1, a device for dispensing a viscous fluid according to the present invention is indicated generally at 20. In the embodiment shown in the drawings, the device is a portable and hand-held grease gun for dispensing a lubricating grease, although other embodiments do not depart from the scope of the invention. The grease gun 20 includes a pump mechanism, indicated generally at 22, which delivers lubricant from a reservoir 24 through a discharge such as a flexible hose 26 to machinery or vehicles which require lubrication.

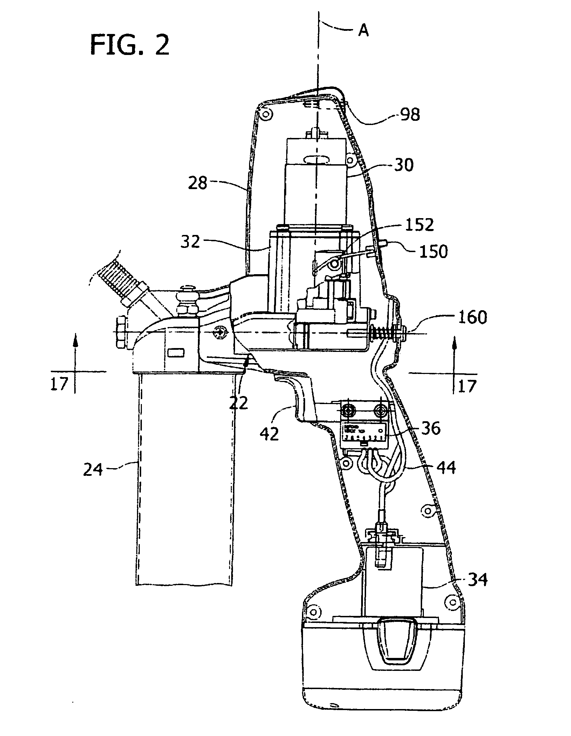

As shown in Fig. 2, the grease gun 20 has a housing 28 which contains the pump. An electric motor 30 and transmission assembly 32 are positioned in the housing 28 generally above the pump 22, with a battery 34 and electric switch 36 positioned in the housing generally below the pump. In one embodiment, the housing 28 has a clamshell structure of molded plastic with two lateral halves held together by several fasteners (not shown). A lower portion of the housing defines a tubular handle 38 (Fig. 1) sized for gripping to enable an operator to grasp and hold the grease gun in one hand. One or more pads 40 (Fig. 1) of a suitable soft material cover the handle 38 to improve comfort and friction. A trigger 42 is positioned on the housing 28 where it is readily engaged by the index finger of the for moving the trigger and thereby opening or closing the switch 36 to activate or de-activate the motor 30. An electrical circuit 44 interconnects the battery 34, the motor 30, and the switch 36, In one embodiment, the battery 34 has a potential of between 12 and 18 volts, and may be rechargeable. Other component arrangements do not depart from the scope of this invention. For example, the motor and/or transmission may be positioned in the lower portion of the housing, or horizontally adjacent to the pump. An external support loop 46 (Fig. 1) is formed on an upper side of the grease gun 20. The loop 46 is configured for receiving a belt or strap (not shown) to carry the grease gun or support it from an operator's shoulder.

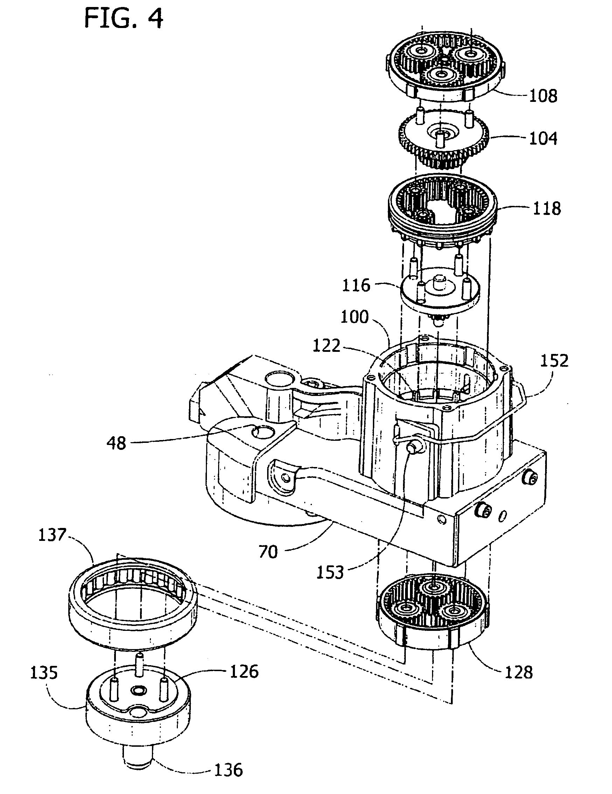

In one embodiment, the reservoir 24 (Fig. 1) has a cylindric shape and contains a replaceable lubricant cartridge with a spring-driven diaphragm (not shown) for urging lubricant upward in the reservoir toward the pump 22. One or more vent passages 48 (Fig. 4) are provided above the reservoir 24 for venting the reservoir to atmospheric pressure. A lower end of the reservoir 24 has a threaded end member or cap 50 (Fig. 1) with a downwardly extending handle 52. The reservoir 24 is removable for refilling by replacing an empty lubricant cartridge with a full one. Other types of reservoirs are also suitable.

The discharge spout 26 a length of flexible hose (Fig. 1) having at each end a coil 56 of a metal surrounding the hose to prevent kinks. A coupler 58 is attached to an end of the hose 26 for sealingly engaging a fitting to lubricate a bearing or other component of machinery. A holder 59 is provided to secure the hose 26 adjacent to the reservoir 24 when the grease gun is not in use. The holder 59 has two clips which receive and grip hose 26.

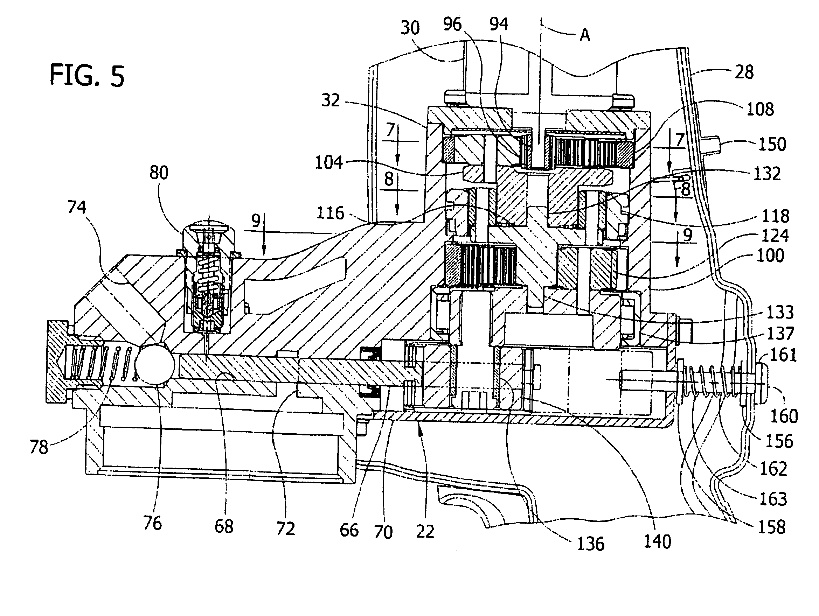

Referring to Fig. 5, the pump 22 has a plunger 66 which reciprocates in a bore 68 of a block 70 held in the housing 28. An inlet 72 intersecting the bore 68 is in communication with the reservoir 24 for flow of lubricant from the reservoir into the bore. The stroke of the plunger 66 ranges from a forward position as indicated in solid lines in Fig. 5, to a rearward position as indicated in phantom lines in Fig. 5. When the plunger 66 is at or near its rearward position, the inlet 72 is not blocked by the plunger and lubricant is free to flow through the inlet into the bore 68. As the plunger 66 moves forward, it blocks the inlet 72 so that no further lubricant can flow into the bore. An outlet 74 of the bore 68 is positioned at the discharge spout 26 for delivery of lubricant thereto. A one-way check valve 76 is positioned adjacent the outlet 74 for preventing backflow. The valve 76 has a ball which is urged by a compression spring 78 toward a closed position against a seat. As the plunger 66 moves through a forward stroke (i.e., to the left in Fig. 5), lubricant within the bore 68 is pushed forward and attains a higher pressure which overcomes the spring force to move the ball of valve 76 away from its seat. Lubricant is then free to flow through the outlet 74 and into the discharge spout 26.

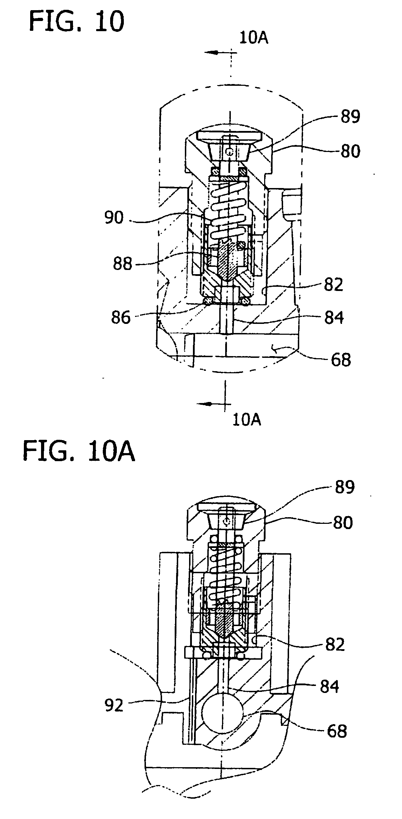

A pressure relief valve 80 (Figs. 5, 10, and 10A) prevents an over-pressure condition which could damage the grease gun 20 or become a safety hazard. The valve 80 is received in a cavity 82 of the block 70 and communicates with the bore 68 via a passage 84 intersecting the bore. An O-ring seal 86 in the cavity 82 surrounds the passage 84 to prevent leaks. The valve 80 has a piston 88 with an enlarged head 89 attached at its outer end. The piston 88 is urged to a closed position against a seat by a compression spring 90. The valve 80 is configured to open when pressure of lubricant in the bore 68 exceeds a predetermined level (e.g., 7,000 psi), the level being determined by characteristics of the spring 90, particularly its spring constant. Lubricant then flows out into the cavity 82, relieving the pressure in the bore 68. When the valve 80 is open, the head 89 and upper portion of the piston 88 project from a surface (e.g., top) of the grease gun, providing a visual indication so that the operator becomes aware of a problem. Referring to Fig. 10A, a return passage 92 is provided so that lubricant which escapes from the bore 68 through the valve 80 returns to the reservoir 24. The passage 92 extends through the pump block from the cavity 82 to a region above the reservoir 24. Lubricant which flows into the cavity will subsequently flow by force of gravity back into the reservoir, thereby conserving lubricant and avoiding mess. It is understood that other types of pressure relief valves are suitable without departing from the scope of this invention.

The motor 30 has a suitable compact and lightweight design, such as a small Permanent Magnet Direct Current (PMDC) motor. An exemplary model is one of the #600 series motors from the Johnson Electric Group of Hong Kong, which has North American offices in Shelton, Connecticut. In one embodiment, the motor has a nominal power rating between one-tenth and one-third horsepower, and more preferably about one-fourth horsepower. It is understood that a motor could be selected to operate with alternating current (AC), such as when the grease gun is powered by an electrical cord of the battery 34. As illustrated in Fig. 5, the motor 30 has a rotatable output shaft 94 for transmitting power, the shaft defining a central axis A through the motor and transmission. A pinion gear 96 is mounted on the output shaft 94 for engaging the transmission 32 and transmitting power thereto.

A circuit breaker 98 (Fig. 2) is positioned in the circuit 44 for protecting the motor 30 from damage due to a short circuit or electrical overload, such as might occur if the plunger 66 should become jammed, for example. If the in the circuit increases beyond a predetermined limit (e.g., 20 to 25 amperes), such as when the motor 30 is beginning to overheat, the circuit breaker 98 breaks the circuit. In one embodiment, the circuit breaker is positioned along the upper portion of the housing 28, where a press-to-reset button is readily accessible. An exemplary circuit breaker is a miniaturized Type 1610 single pole circuit breaker with a thermal tripping mechanism, manufactured by E-T-A Circuit Breakers, which has offices in Mount Prospect, Illinois.

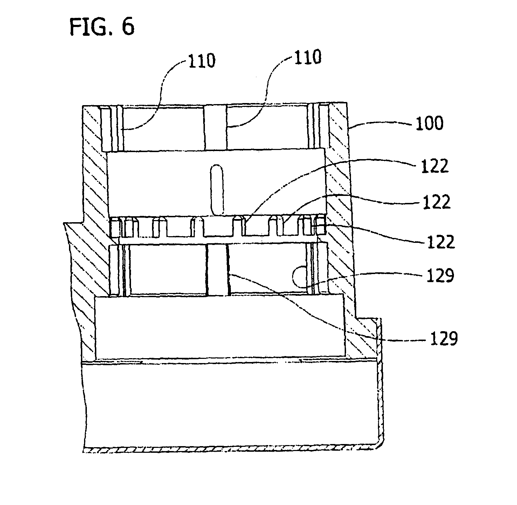

The transmission assembly 32 is positioned between the motor 30 and plunger 66 with a system of gears that transforms rotational motion of the motor output shaft 94 into linear reciprocal motion of the plunger. The transmission also reduces the cyclical frequency of shaft rotation to a corresponding plunger reciprocal frequency, and simultaneously increases torque. As shown in Figs. 4 and 5, the transmission 32 is contained in a cylindric casing 100 which is integral with the pump block 70, although the casing and block may be distinct component parts. The interior of the casing 100 is exemplified in Fig. 6. In one embodiment, the transmission has three stages of planetary gears. However, it is understood that the number of stages may vary. Further, alternate gear configurations do not depart from the scope of this invention.

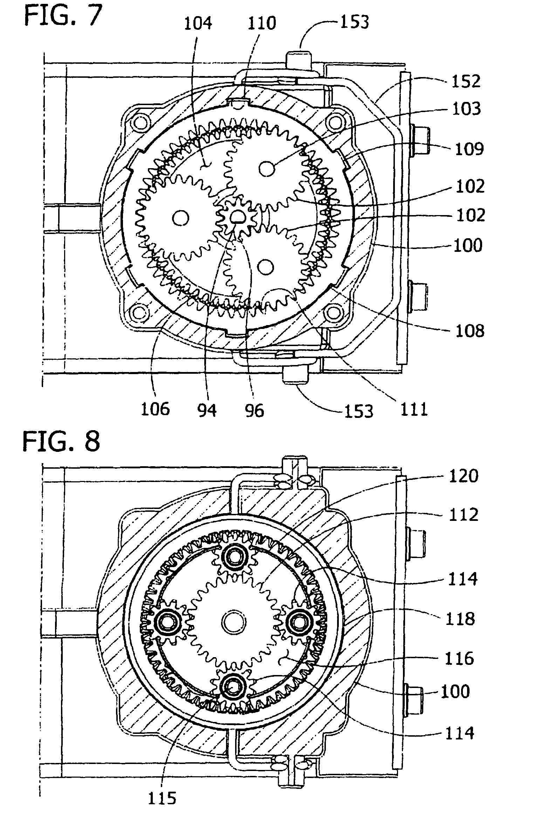

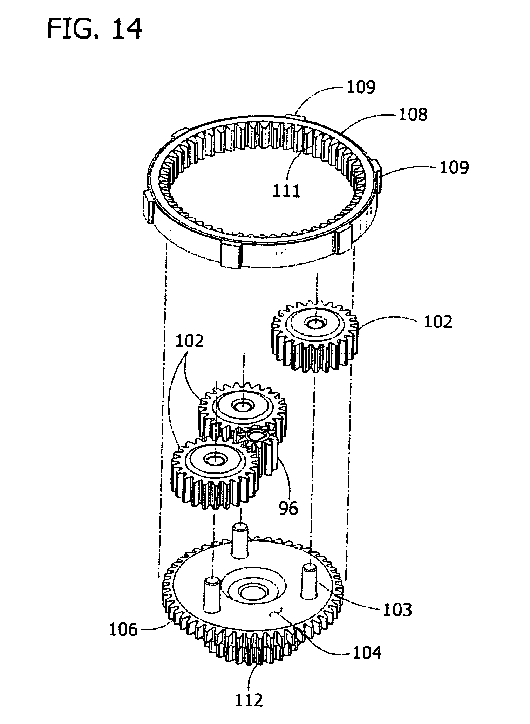

Referring to Figs. 7 and 14, the transmission includes a first stage of planet gears 102 meshing with the pinion gear 96 of the motor output shaft 94. Each of the planet gears 102 of this stage is journalled on a pin 103 for rotation about its respective axis on a first stage carrier 104. The first stage carrier 104 has radially outward facing teeth 106 around its circumference, the function of which is described below. An outer ring gear 108 of the first stage is mounted in fixed position relative to the casing 100 by circumferentially-spaced bosses 109 on its rim which are received in corresponding recesses 110 (Fig. 6) of the casing. The outer ring gear 108 has internal gear teeth 111 facing radially inward which mesh with the teeth of the planet gears 102. As the pinion gear 96 rotates the planet gears 102, they in turn orbit (i.e., rotate) about the central axis A and move around the ring gear 108. In so doing, the first stage carrier 104 rotates about the central axis at some less than the speed of rotation of the output shaft 94. Accordingly, a first speed reduction is achieved. In one embodiment, a speed ratio of the first stage (input/output) is about 6.6.

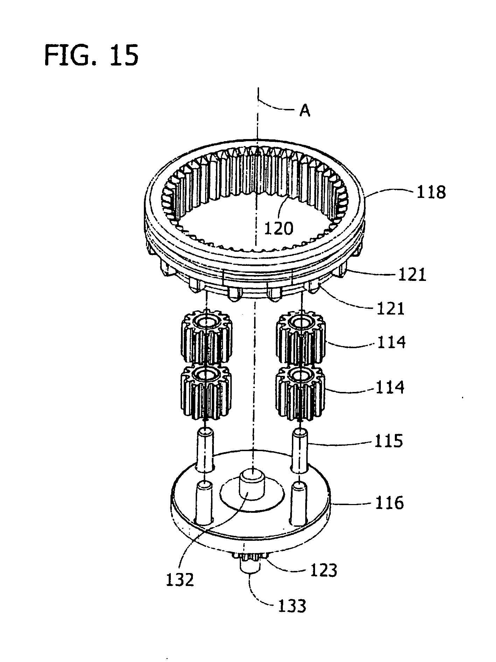

The first stage carrier 104 includes a sun gear 112 which projects downward and drives a second stage of planet gears 114. The planet gears 114 of the second stage (Figs. 8 and 15) are likewise journalled on pins 115 for rotation about their own axes on a second stage carrier 116. A second outer ring gear 118 has internal gear teeth 120 facing radially inward for meshing with the teeth of the second stage planet gears 114. External formations 121 (Fig. 15) are spaced around a lower portion of the circumference of gear 118 for being received in corresponding recesses 122 (Figs. 4 and 6) in the interior of casing 100. The second ring gear 118 is axially movable between two positions, as described below. At its first position (Fig. 5), the ring gear 118 is rotationally stationary relative to the housing 28 because the formations 121 are received in the recesses 122 and hold the ring gear from rotating. As the first sun gear 112 rotates the planet gears 114 of the second stage, they in turn orbit about the central axis A and rotate the second stage carrier 116 at some speed less than the speed of rotation of the first sun gear. In embodiment, a speed ratio of the second stage (input/output) is about 2.9.

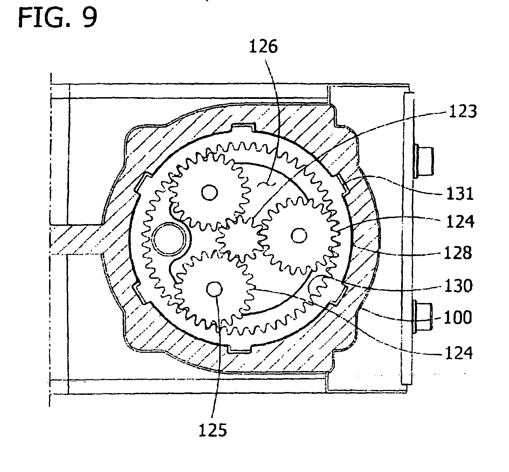

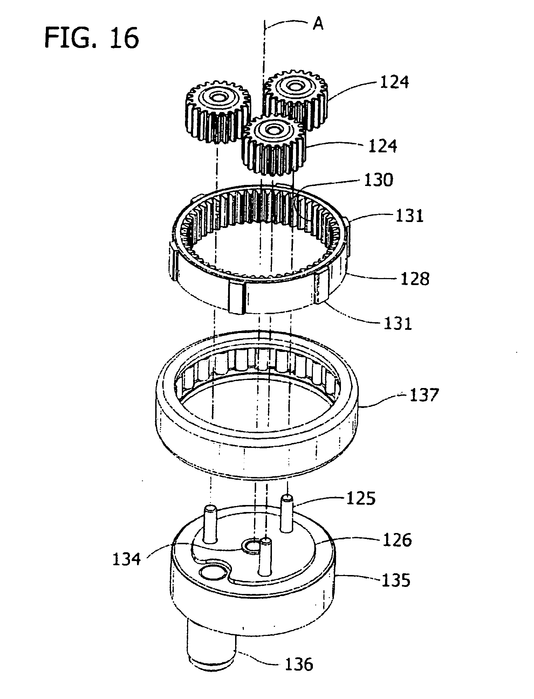

Similarly, the second stage carrier 116 has its own sun gear 123 which projects downward and drives a third of planet gears 124. The planet gears 114 of the third stage (Figs. 9 and 16) are likewise journalled on pins 125 for rotation about their own axes on a third stage carrier 126. A third stage outer ring gear 128 has internal gear teeth 130 facing radially inward for meshing with the teeth of the third stage planet gears 124. The third ring gear 128 is held at a fixed position relative to the housing 28 by circumferentially-spaced bosses 131 on its rim which are received in corresponding recesses 129 (Fig. 6) of the housing. Therefore, third ring gear 128 is rotationally stationary. As the second sun gear 123 rotates the planet gears 124 of the third stage, they in turn orbit about the central axis A and rotate the third stage carrier 126 at some speed less than the speed of rotation of the second sun gear. In one embodiment, a speed ratio of the third stage (input/output) is about 5.5.

In one embodiment and as shown on Fig. 6, the casing 100 has three sets of recesses (110, 122, 129) for receiving locking formations (109, 121, 131) of the respective outer ring gear of stage.

A total speed reduction ratio of the transmission assembly 32 is the product of the individual stage ratios (e.g., 6.6 x 2.9 x 5.5 = 105). Torque is simultaneously multiplied by the same product, which promotes the grease gun pumping lubricant against higher pressures. The number of gears, stages, and/or pitch of teeth can differ without departing from the scope of this invention.

The concentric alignment of the transmission stages along axis A is maintained by the outer ring gears 108, 118, 128 which are each received in the casing 100 at a position centered around the axis. In addition, the present invention provides alignment formations 132, 133 which strengthen the stability and concentricity of the transmission 32 to enhance smooth operation. The alignment formations comprise upper shaft segment 132 (Figs. 5 and 15) and lower shaft segment 133, each of which project from second stage carrier 116. The upper shaft segment 132 is received in an opening at the center of the lower surface of the first stage carrier 104. Lower shaft segment 133 is received in an opening 134 (Fig. 16) at the center of the upper surface of the third stage carrier 126. The shaft segments 132, 133 are aligned along axis A. cylindric outer periphery of each shaft segment provides a bearing surface for relative rotation between the carriers and maintaining alignment therebetween. It is understood that a grease gun without any alignment formations or having a different form of alignment formation(s) does not depart from the of this invention.

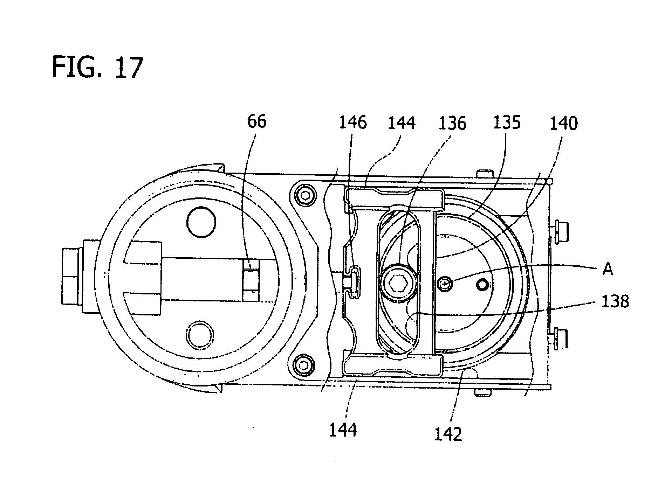

The third carrier 126 is attached to a final driver 135 of the transmission, defined by a cylindric body shown in Figs. 4 and 16. final driver 135 and carrier 126 may have other shapes, configurations, or be integrally formed without departing from the of this invention. Positioned between cylindric peripheral of final driver 135 and cylindric interior surface of the casing 100 is a roller bearing assembly 137 that mounts final driver for rotation. A drive pin 136 with a cylindric bushing extends from the final driver 135, the pin being parallel and offset from central axis A. The drive pin 136 is slidably received in an oblong slot 138 (Fig. 17) of a yoke 140 which reciprocates as the final driver rotates. The yoke 140 is contained in a cavity of the pump block 70 which comprises a slide box 142 for reciprocal motion of the yoke. In one embodiment, the yoke 140 has a generally rectangular shape with opposite lateral sides 144 defining sliding surfaces. A transverse T-shaped slot 146 in a side of the yoke 140 receives a head of the plunger 66. Further details of the yoke and its operation are described in the aforementioned U.S. Patent No. 6,135,327.

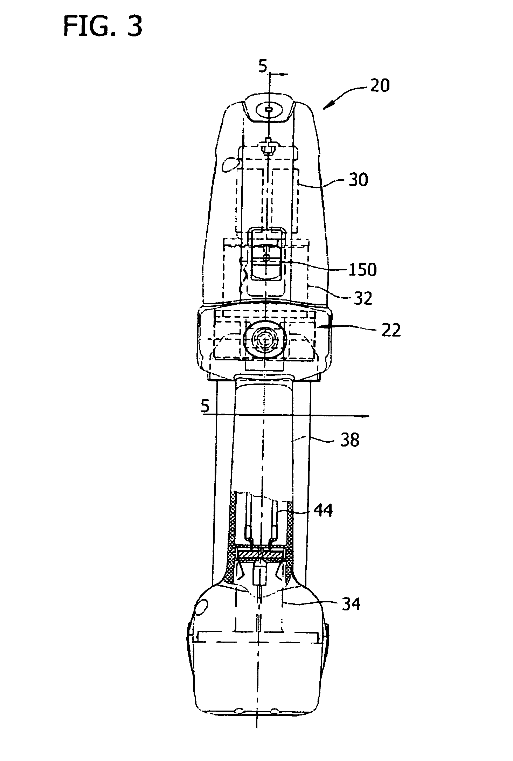

Significantly, the transmission 32 has multiple speed settings so that the operator of the grease gun 20 can select desired reduction ratios between the motor 30 and plunger 66. In one embodiment, there are two speed settings, although there be any number of discrete settings or a continuously (infinitely) variable speed adjustment without departing from the scope of this invention. The low speed setting of the exemplary two-speed transmission 32 produces relatively greater torque, such as for when dispensing grease against a higher back pressure. In embodiment, the grease gun in the low speed setting dispenses grease against a back pressure within a range between 0 to 7,000 psi, and more preferably within a range between 0 to 10,000 psi. The high speed setting produces greater volumetric output, but relatively lower torque. In One embodiment, the grease gun in the high speed setting dispenses grease against a back pressure within a range between 0 and 500 psi, and more preferably within a range between 0 and 3,000 psi. The operator changes between settings by moving a selector 150 (e.g., a slidable switch), shown in Figs. 1 and 3, on the housing 28 which activates/de-activates the second of three planetary gear stages. Changes between settings are made at times when the grease gun is switched off and not operating.

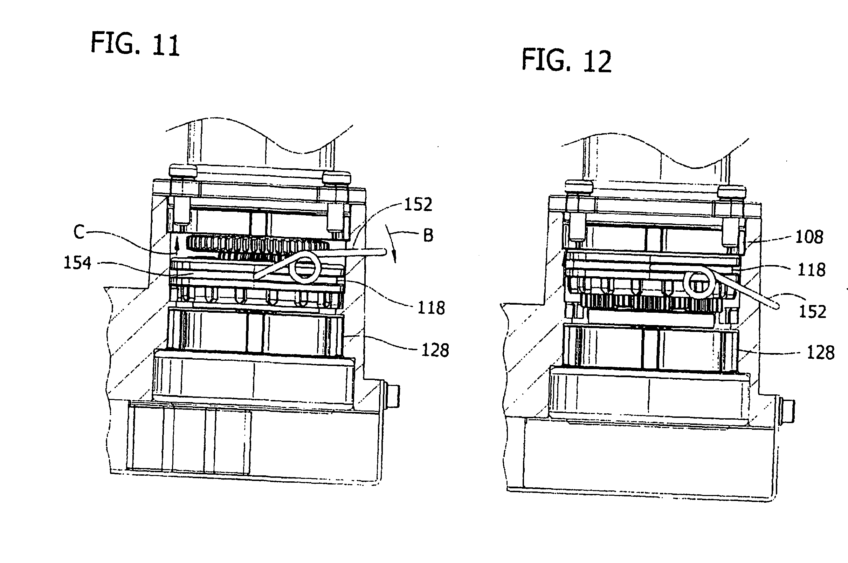

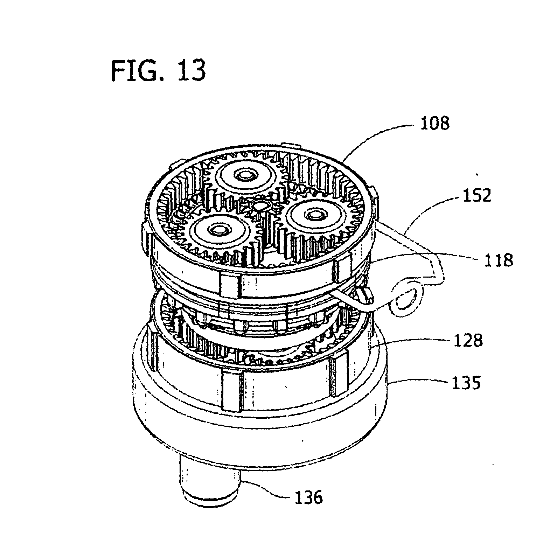

The selector switch 150 is connected to a lever wire 152 which is pivotally-mounted on a pair of opposite lugs 153 (Figs. 4 and 7) on the casing 100. Movement of the switch pivots the lever wire 152 to cause the second ring gear 118 to move axially between the first position (Figs. 5 and 11), corresponding with the low speed setting, where it is rotationally fixed as described above, and a second position (Figs. 12 and 13), corresponding with the high speed setting, where the second ring gear 118 rotates together with the first stage sun gear 112. In the embodiment and orientation shown in the drawings, the axial movement is generally vertical with the second ring gear 118 being at a relatively lower elevation at the first position and at a relatively higher elevation at the second position. Inner ends of the lever wire 152 extend into the interior of casing 100 through openings in the casing and are received in a circumferential groove 154 (Fig. 11) in second ring gear 118. Movement of the switch 150 and outer end of wire 152 in a downward direction (indicated by arrow B in Fig. 11) causes gear 118 to move upward (indicated by arrow C).

At the first position, formations 121 on the second ring gear 118 mesh with corresponding recesses 122 of the casing 100. Thus, the second ring gear 118 is locked to the casing and prevented from rotating relative to the housing 28. Consequently, the speed reduction of the second is accomplished.

At the second position, the formations 121 of the second ring gear 118 are removed from the recesses 122, leaving the second ring gear free to rotate. The radially-inward facing teeth 120 of the second ring gear are positioned adjacent the outward facing teeth 106 around the circumference of the first stage carrier 104. When the motor begins to operate, the teeth 106 align and mesh with the teeth 120. Thus, the second ring gear 118 is locked on the first stage carrier 104 and rotates with it. Accordingly, the planet gears 114 of the second stage do not rotate about their own axes, but merely transmit the rotation of the first stage carrier 104 directly to the second stage carrier 116 with no speed reduction. The second stage is thus de-activated, with its reduction ratio (input/output) being 1.0. A total speed reduction ratio of the transmission at the high speed setting is the product of the individual stage ratios (e.g., 6.6 x 1.0 x 5.5 = 36). It is understood that different types of transmissions (i.e., other than multi-stage or planetary systems), and transmissions which selectively de-activate different portions including, for example, a first or third stage, do not depart from the scope of this invention.

The lever wire 152 has tension which securely holds the second ring gear 118 at its selected position, including particularly when exposed to vibrations. When an operator of the grease gun moves the switch 150, lever wire 152 pivots about lugs 153 and moves the ring gear 118 to a selected position. The ring is subsequently held at the position until the operator again moves the switch in order to change the speed setting of the transmission.

In one embodiment, the grease gun 20 provides an indication corresponding to the quantity of lubricant dispensed. As shown in Figs. 2 and 5, a cycle indicator 160 is mounted in the housing 28 generally to the yoke 140. In one embodiment, the indicator 160 includes a movable rod 162 which is generally aligned with the plunger 66. A head 161 of the rod is located outside the housing 28. The plunger is moveable between a retracted position (shown in Fig. 5) wherein the head 161 engages the surface of housing 28, and an extended position (not shown) wherein the head is spaced away from the surface of the housing. A spring 163 biases the rod 162 toward its retracted position. In one embodiment, the spring 163 is captured between a washer 156 which slides on the rod 162 and a flange 158 which is fixed on the rod. When the yoke 140 strokes outward (to the right on the drawings), it the rod 162 and pushes it to the extended position.

To determine a rate of delivery of lubricant, an operator of the grease gun places a finger or thumb over the cycle indicator 160 and counts the number of strokes in a given period of time by feeling the number of pulses (i.e., reciprocal movements) of the rod 162. The number of strokes and a corresponding quantity of lubricant dispensed may be readily correlated with time of operation at each speed setting. Those correlations can be used in subsequent operations to determine quantity of lubricant dispensed based on time without regard to the cycle indicator. It is understood that other configurations and embodiments for providing an indication of quantity do not depart from the scope of this invention, For example, the indicator may be electronic in nature and based upon sensors detecting and counting a number of rotations or cycles of a component of the pump, motor, or transmission. Further, the indication may be visual, such as an indicator light which illuminates once per cycle or number of cycles, or may be audible or tactile.

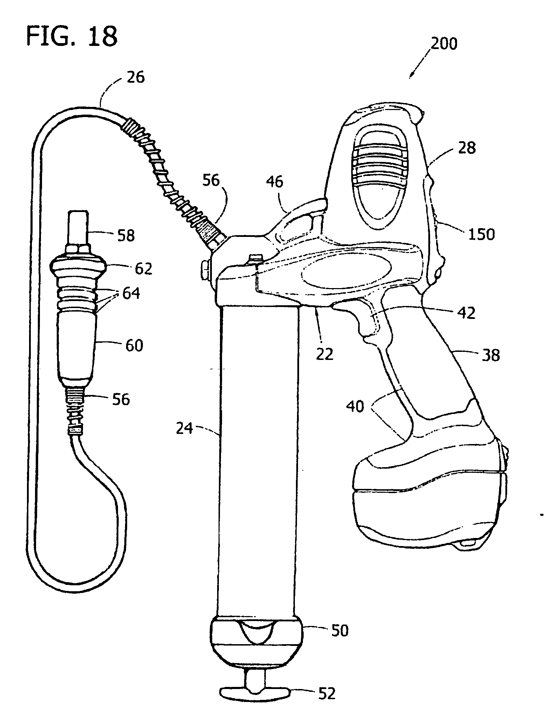

Referring to Fig. 18, a second embodiment 200 of the grease gun of the present invention is shown. The second embodiment includes an ergonomically shaped hand grip 60 which is provided adjacent to the coupler 58 for ease of handling and manipulation of the hose 26. The hand grip 60 has an enlarged circumferential ridge 62 and several circumferential grooves 64 to reduce slip. Other shapes do not depart from the scope of this invention. The hand grip 60 is formed of a suitable resilient material, such as a soft rubber.

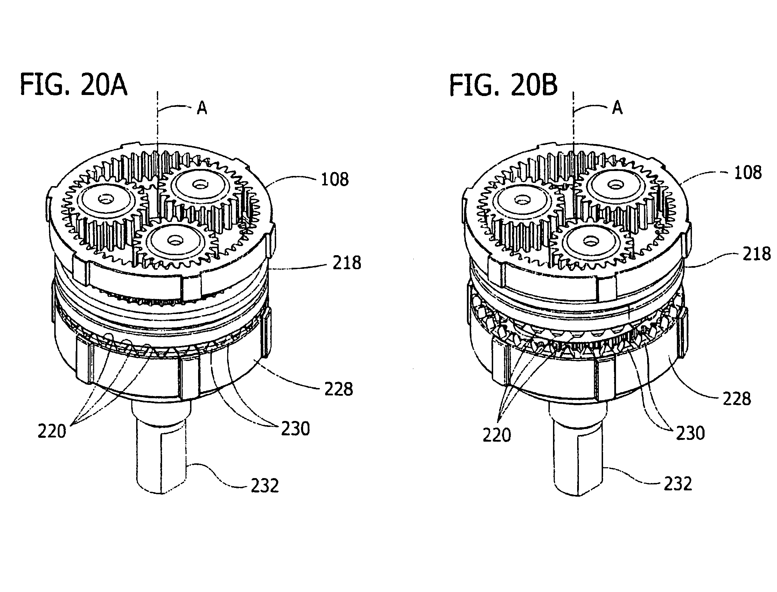

The second embodiment 200 has a three-stage transmission assembly which is generally similar to that of the first embodiment. However, its second ring gear 218 has axially extending teeth 220 configured to mesh with corresponding axially extending teeth 230 on the third ring gear 228. At the first (low speed) position of Fig. 20A, the second ring gear 218 is prevented from rotating by being locked to the third ring gear 228. Unlike the first embodiment wherein formations 121 hold the ring gear 118 directly to the casing 100, the ring gear 218 is held by teeth 220 to the third ring gear 228 which in turn is rotationally stationary. When moved to the second (high speed) position of Fig. 20B, the second ring gear 218 is free to rotate because the teeth 220 do not engage teeth 230. The ring gear 218 is then locked to the first satge carrier 104 to de-activate the second of the transmission.

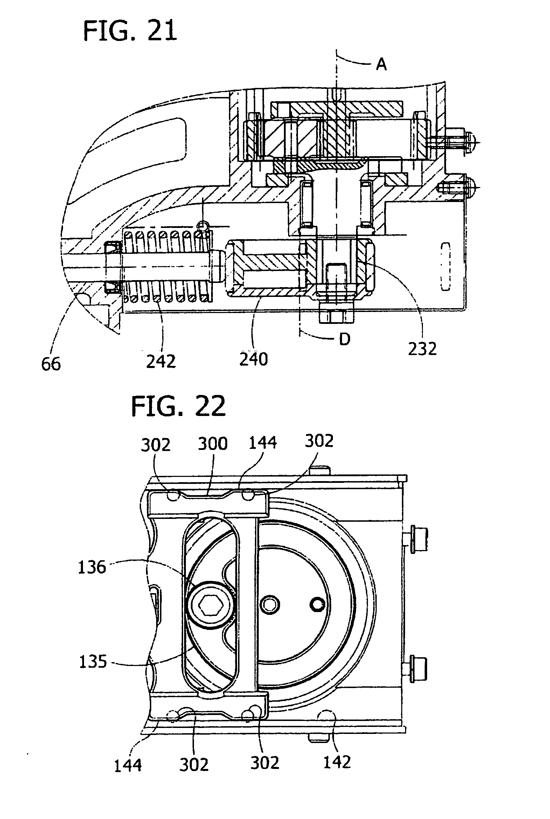

A drive shaft 232 extends downward from the transmission of the second embodiment 200 and is aligned with the central axis A. As shown in Fig. 21, an eccentric cam 240 is attached to the drive shaft 232.
The cam 240 has a generally cylindric shape with a smooth external circumferential surface, and is mounted with its center D (Fig. 21) being spaced from the central axis A. The plunger 66 is fitted with a spring 242 which urges the plunger toward the cam 240, such that an end of the plunger functions as a cam follower which engages the surface of the cam. Rotation of the eccentric cam 240 about the central axis A the plunger 66 to reciprocate. It is understood that second embodiment 200 could include final driver 135 with offset drive pin 136 (Fig. 16) in lieu of the cam 240. That is, the gearing mechanism of the stages to reduce speed is not dependent on the type of rotary-to-linear motion conversion mechanism. The cycle indicator 160 may or may not be included with either transmission of the first or second embodiments.

Another variation of the grease gun which could be on either of the first and second embodiments includes the yoke 300 shown in Fig. 22. Rollers 302 (e.g., rolling pins) are mounted to side surfaces 144 of the yoke. Instead of sliding within the slide box 142, the yoke 300 rolls within the slide box. An advantage of this configuration is decreased friction relative to the sliding yoke due to the rolling engagement of the pins 302 with the walls of the slide box 142.

In view of the above, it will be seen that the several objects of the invention are achieved and other advantageous results obtained.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there be additional elements other than the listed elements.

As various changes could be made in the above without departing from the scope of the invention, it is intended that all matter contained in the above description and shown in the accompanying drawings shall be interpreted as illustrative and not in a limiting sense.

## Claims

1. A device (20) for dispensing viscous fluid, comprising:
a reservoir (24) holding a supply of said viscous fluid;
a pump (22) adjacent the reservoir (24) having a reciprocating plunger (66) for pumping said fluid from the reservoir (24) toward a discharge (74);
an electric motor (30) for driving the pump (22), the motor having an output shaft (94); **caracterized by**
a variable speed transmission (32) coupled between the motor output shaft (94) and the plunger (66) for transmitting power from the motor (30) to the pump (22);
wherein the transmission (32) has at least two different output speed settings adapted to be selected for reciprocating the plunger (66) at different cyclical frequencies.

2. A device as set forth in claim 1 wherein the transmission (32) is changeable between a first speed setting transmission is changeable between a first speed setting at which the plunger (66) reciprocates at a first cyclical frequency, and a second speed setting at which the plunger reciprocates at a second cyclical frequency.

3. A device as set forth in claim 2 wherein the transmission (32) comprises a plurality of stages.

4. A device (20) as set forth in claim 3 wherein at the first speed setting, one or more stages of the transmission are active, and at the second speed setting, a different number of transmission stages are active than at the first setting.

5. A device as set forth in claim 4 wherein each of said stages includes an outer ring gear (108, 118 128) and planet gears (102, 114, 124) inside the ring gear having teeth which mesh with the ring gear.

6. A device as set forth in claim 5 wherein at least one of said ring gears (108,118,128) is moveable between a first position where it is rotationally fixed and a second position where it is free to rotate.

7. A device as set forth in claim 6 further comprising a casing (100) which contains the transmission, and wherein said at least one moveable ring gear (108, 118, 128) at its first position is locked to the casing.

8. A device as set forth in claim 7 wherein said at least one moveable ring gear (108, 118, 128) has at least one formation (109, 121, 131) on its outer circumference, and wherein said casing (100) has a corresponding recess (110, 122, 129) which receives said formation.

9. A device as set forth in claim 7 wherein there are three transmission stages (102, 114, 124), and wherein said casing (100) has three sets of recesses (110, 122, 129) for receiving locking formations of outer ring gears (108,118,128) of the respective three stages.

10. A device as set forth in claim 6 wherein said at least one moveable ring gear (108, 118, 128) at its first position is locked to another one of said ring gears.

11. A device as set forth in claim 10 wherein said at least one moveable ring gear (108, 118, 128) has a first set of teeth (111, 120, 130) extending radially inward for meshing with said planet gears (102, 114, 124) and a second set of teeth extending axially for meshing with said another one of said ring gears.

12. A device as set forth in claim 2 wherein said plurality of stages of the transmission are aligned along an axis (A), and further comprising at least one alignment formation engaging two adjacent stages of the transmission for maintaining concentricity of the stages about said axis.

13. A device as set forth in claim 12 wherein said at least one alignment formation comprises a shaft segment (132, 133) projecting from one transmission stage which is received in an opening of a second transmission stage.

14. A device as set forth in claim 2 further comprising a drive shaft extending from the transmission, an eccentric cam (240) attached to the shaft having an external surface, and a spring (242) for urging the plunger (66) toward said external surface of the cam (240) whereby rotation of the cam causes the plunger to reciprocate.

15. A device as set forth in claim 2 further comprising a block containing the pump and having a cavity defining a slide box, and a yoke (140) which reciprocates in the slide box (142) and drives the plunger (66), the yoke having sliding surfaces adapted for sliding contact with walls of the slide box.

16. A device as set forth in claim 2 further comprising a block (70) containing the pump and having a cavity defining a slide box, and a yoke (140) which reciprocates in the slide box and drives the plunger (66), the yoke having rollers (137) adapted for rolling contact with walls of the slide box.

17. A device as set forth in any one of claims 1 to 16 further comprising an electrical circuit (44) connected to said electric motor (30), and a circuit breaker (98) positioned in the circuit for protecting the motor from damage.

18. A device as set forth in any one of claims 1 to 17 further comprising said discharge which includes a flexible hose (26) and an ergonomically shaped hand grip (38) for manipulation of the hose.

19. A device (20) as set forth in any one of claims 1 to 18 wherein said device comprises a grease gun for dispensing lubricant.

20. A method for dispensing a viscous fluid at a selectable rate of discharge, the method comprising the steps of:
providing a supply of said viscous fluid to a pump (22) with a reciprocal plunger (66) for pumping said fluid from said supply toward an outlet (74); **caracterized by**
operating an electric motor (30) having a variable speed transmission (32) at a first speed to reciprocate the plunger (66) at a first cyclical frequency to dispense said fluid at a first rate of discharge;
changing an adjustable speed setting on the variable speed transmission (32); and
operating said electric motor (30) at a second speed to reciprocate the plunger at a second cyclical frequency to dispense said fluid at a second rate of discharge different than said first rate.

21. A method for dispensing a viscous fluid as set forth in claim 20 wherein said transmission (32) comprises a plurality of stages and at said first rate of discharge one or more stages of the transmission (32) are active, and wherein said step of changing the adjustable speed seating activates or deactivates one stage such that at said second rate of discharge, a different number of transmission stages are active than at the first setting.

## Patentansprüche

1. Gerät (20) zur Abgabe viskoser Flüssigkeit mit
einem einen Vorrat der viskosen Flüssigkeit enthaltenden Behälter (24),
einer Pumpe (22) an dem Behälter (24) mit einem hin und her gehenden Kolben (66) zum Pumpen der Flüssigkeit aus dem Behälter (24) zu einer Ausflussöffnung (74),
einem Elektromotor (30) mit einer Ausgangswelle (94) zum Antrieb der Pumpe (22), **gekennzeichnet durch**
ein Getriebe (32) mit variabler Drehzahl, das zwischen die Motorausgangswelle (94) und den Kolben (66) gekuppelt ist, um Antriebsleistung von dem Motor (30) auf die Pumpe (22) zu übertragen,
wobei das Getriebe (32) wenigstens zwei unterschiedliche Einstellungen der Ausgangsdrehzahl hat, die zur Auswahl unterschiedlicher periodischer Frequenzen der Hin- und Herbewegung des Kolbens (66) eingerichtet sind.

2. Gerät nach Anspruch 1, bei dem das Getriebe (32) zwischen einer ersten Drehzahleinstellung, bei der der Kolben (66) mit einer ersten periodischen Frequenz hin und her geht, und einer zweiten Drehzahleinstellung umschaltbar ist, bei der der Kolben mit einer zweiten periodischen Frequenz hin und her geht.

3. Gerät nach Anspruch 2, bei dem das Getriebe (32) eine Mehrzahl von Stufen umfasst.

4. Gerät (20) nach Anspruch 3, bei dem bei der ersten Drehzahleinstellung eine oder mehrere Getriebestufen aktiv sind und bei der zweiten Drehzahleinstellung eine Anzahl von Getriebestufen aktiv ist, die von der der ersten Einstellung verschieden ist.

5. Gerät nach Anspruch 4, bei dem jede der Stufen einen äußeren Zahnring (108,118,128) und innerhalb des Zahnrings Planetenzahnräder (102,114,124) umfasst, deren Zähne mit dem Zahnring kämmen.

6. Gerät nach Anspruch 5, bei dem wenigstens einer der Zahnringe (108,118,128) zwischen einer ersten Position, in der er drehmäßig festgelegt ist, und einer zweiten Position beweglich ist, in der er frei drehbar ist.

7. Gerät nach Anspruch 6, ferner mit einem Gehäuse (100), das das Getriebe enthält, und bei dem der wenigstens eine bewegliche Zahnring (108,118,128) in seiner ersten Position mit dem Gehäuse verriegelt ist.

8. Gerät nach Anspruch 7, bei dem der wenigstens eine bewegliche Zahnring (108,118,128) auf seinem äußeren Umfang wenigstens eine Anformung (109,121,131) hat und bei dem das Gehäuse (100) eine entsprechende Aussparung (110,122,129) hat, die die genannte Anformung aufnimmt.

9. Gerät nach nach Anspruch 7, bei dem es drei Getriebestufen (102,114,124) gibt und bei dem das Gehäuse (100) drei Sätze Aussparungen (110,122,129) hat zur Aufnahme von Verriegelungsanformungen der äußeren Zahnringe (108,118,128) der drei Stufen.

10. Gerät nach Anspruch 6, bei dem der wenigstens eine bewegliche Zahnring (108,118,128) in seiner ersten Position mit einem anderen der genannten Zahnringe verriegelt ist.

11. Gerät nach Anspruch 10, bei dem der wenigstens eine bewegliche Zahnring (108,118,128) einen ersten Satz Zähne (111,120,130), die sich zum Kämmen mit den Planetenzahnrädern (102,114,124) radial nach innen erstrecken, und einen zweiten Satz Zähne hat, die sich zum Kämmen mit einem anderen der genannten Zahnringe axial erstrecken.

12. Gerät nach Anspruch 2, bei dem die Mehrzahl der Stufen des Getriebes längs einer Achse (A) ausgefluchtet ist und bei dem das Gerät ferner wenigstens eine Ausfluchtanformung aufweist, die mit zwei benachbarten Getriebestufen in Eingriff ist, um die Konzentrizität der Stufen um die Achse aufrecht zu erhalten.

13. Gerät nach Anspruch 12, bei dem die wenigstens eine Ausfluchtanformung ein Wellensegment (132,133) aufweist, das von einer Getriebestufe vorsteht und in einer Öffnung einer zweiten Getriebestufe aufgenommen ist.

14. Gerät nach Anspruch 2, ferner mit einer von dem Getriebe ausgehenden Antriebswelle, einem an der Welle angebrachten exzentrischen Nocken (240) mit einer Außenfläche und einer den Kolben (66) gegen die Außenfläche des Nockens (240) drückenden Feder (242), wodurch eine Nockendrehung den Kolben zu einer hin und her gehenden Bewegung veranlasst.

15. Gerät nach Anspruch 2, ferner mit einem Block, der die Pumpe enthält und einen einen Schieberkasten begrenzenden Hohlraum hat, und einem Joch (140), das in dem Schieberkasten (142) hin und her geht und den Kolben (66) antreibt, wobei das Joch für den Gleitkontakt mit den Wandungen des Schieberkastens eingerichtete Gleitflächen hat.

16. Gerät nach Anspruch 2, ferner mit einem Block (70), der die Pumpe enthält und einen einen Schieberkasten begrenzenden Hohlraum hat, und einem Joch (140), das in dem Schieberkasten hin und her geht und den Kolben (66) antreibt, wobei das Joch für rollenden Kontakt mit den Wandungen des Schieberkastens eingerichtete Rollen (137) hat.

17. Gerät nach einem der Ansprüche 1 bis 16, ferner mit einer an den Elektromotor (30) angeschlossenen elektrischen Schaltung (44) und einem zum Schutz des Motors gegen Beschädigung in der Schaltung angeordneten Schaltungsunterbrecher (98).

18. Gerät nach einem der Ansprüche 1 bis 17, bei dem die Ausflussöffnung einen flexiblen Schlauch (26) und einen ergonomisch geformten Handgriff (38) zur Handhabung des Schlauches hat.

19. Gerät (20) nach einem der Ansprüche 1 bis 18, bei dem das Gerät eine Schmierpresse für die Schmiermittelabgabe aufweist.

20. Verfahren zur Abgabe einer viskosen Flüssigkeit mit einer wählbaren Ausflussgeschwindigkeit, bei dem man
einen Vorrat der viskosen Flüssigkeit für eine Pumpe (22) mit einem hin und her gehenden Kolben (66) bereitstellt zum Pumpen der Flüssigkeit von dem Vorrat zu einem Auslass (74), **dadurch gekennzeichnet, dass** man
einen Elektromotor (30) mit einem Getriebe (32) mit variabler Drehzahl mit einer ersten Drehzahl betreibt, um den Kolben (66) mit einer ersten periodischen Frequenz zur Abgabe der Flüssigkeit mit einer ersten Abgabegeschwindigkeit hin und her zu bewegen,
eine einstellbare Drehzahleinstellung an dem Getriebe (32) mit variabler Drehzahl verändert und
den Elektromotor (30) mit einer zweiten Drehzahl betreibt, um den Kolben mit einer zweiten periodischen Frequenz hin und her zu bewegen, um die Flüssigkeit mit einer zweiten Abgabegeschwindigkeit abzugeben, die von der genannten ersten Geschwindigkeit verschieden ist.

21. Verfahren zur Abgabe einer viskosen Flüssigkeit nach Anspruch 20, bei dem das Getriebe (32) mehrere Stufen aufweist und bei der genannten ersten Abgabegeschwindigkeit eine oder mehrere Stufen des Getriebes (32) aktiv sind und bei dem die Stufe der Änderung der einstellbaren Drehzahleinstellung eine Stufe aktiviert oder entaktiviert, so dass bei der genannten zweiten Abgabegeschwindigkeit eine andere Anzahl von Getriebestufen als bei der ersten Einstellung aktiv ist.

## Revendications

1. Dispositif (20) pour distribuer du fluide visqueux, comprenant :
un réservoir (24) contenant une alimentation dudit fluide visqueux ;
une pompe (22) adjacente au réservoir (24) ayant un piston plongeur (66) effectuant un mouvement de va-et-vient pour pomper ledit fluide du réservoir (24) vers une décharge (74) ;
un moteur électrique (30) pour entraîner la pompe (22), le moteur ayant un arbre de sortie (94) ; **caractérisé par** :
une transmission à vitesse variable (32) couplée entre l'arbre de sortie de moteur (94) et le piston plongeur (66) pour transmettre la puissance du moteur (30) à la pompe (22) ;
dans lequel la transmission (32) a au moins deux réglages de vitesses de sortie différents adaptés pour être sélectionnés afin de faire faire un mouvement de va-et-vient au piston plongeur (66) à des fréquences cycliques différentes.

2. Dispositif selon la revendication 1, dans lequel la transmission (32) peut être changée entre un premier réglage de vitesse auquel le piston plongeur (66) effectue un mouvement de va-et-vient à une première fréquence cyclique, et un second réglage de vitesse auquel le piston plongeur effectue un mouvement de va-et-vient à une seconde fréquence cyclique.

3. Dispositif selon la revendication 2, dans lequel la transmission (32) comprend une pluralité d'étages.

4. Dispositif (20) selon la revendication 3, dans lequel, au premier réglage de vitesse, un ou plusieurs étages de la transmission sont actifs et au second réglage de vitesse, un nombre d'étages de transmission différents sont actifs par rapport au premier réglage.

5. Dispositif selon la revendication 4, dans lequel chacun desdits étages comprend une roue dentée externe (108, 118, 128) et des roues planétaires (102, 114, 124) à l'intérieur de la roue dentée ayant des dents qui s'engrènent avec la roue dentée.

6. Dispositif selon la revendication 5, dans lequel au moins l'une desdites roues dentées (108, 118, 128) est mobile entre une première position dans laquelle elle est rotationnellement fixée et une seconde position dans laquelle elle est libre de tourner.

7. Dispositif selon la revendication 6, comprenant en outre un boîtier (100) qui contient la transmission et dans lequel ladite au moins une roue dentée mobile (108, 118, 128) dans sa première position, est bloquée sur le boîtier.

8. Dispositif selon la revendication 7, dans lequel ladite au moins une roue dentée mobile (108, 118, 128) a au moins une formation (109, 121, 131) sur sa circonférence externe, et dans lequel ledit boîtier (100) a un évidement (110, 122, 129) correspondant qui reçoit ladite formation.

9. Dispositif selon la revendication 7, dans lequel on trouve trois étages de transmission (102, 114, 124) et dans lequel ledit boîtier (100) a trois ensembles d'évidements (110, 122, 129) pour recevoir les formations de blocage des roues dentées externes (108, 118, 128) des trois étages respectifs.

10. Dispositif selon la revendication 6, dans lequel ladite au moins une roue dentée mobile (108, 118, 128) dans sa première position est bloquée sur une autre desdites roues dentées.

11. Dispositif selon la revendication 10, dans lequel ladite au moins une roue dentée mobile (108, 118, 128) a un premier ensemble de dents (111, 120, 130) s'étendant radialement vers l'intérieur pour s'engrener avec lesdites roues planétaires (102, 114, 124) et un second ensemble de dents s'étendant de manière axiale pour s'engrener avec ladite autre roue desdites roues dentées.

12. Dispositif selon la revendication 2, dans lequel ladite pluralité d'étages de la transmission est alignée le long de l'axe (A), et comprenant en outre au moins une formation d'alignement mettant en prise deux étages adjacents de la transmission pour maintenir la concentricité des étages autour dudit axe.

13. Dispositif selon la revendication 12, dans lequel ladite au moins une formation d'alignement comprend un segment d'arbre (132, 133) faisant saillie à partir d'un étage de transmission qui est reçu dans une ouverture d'un second étage de transmission.

14. Dispositif selon la revendication 2, comprenant en outre un arbre d'entraînement s'étendant à partir de la transmission, une came excentrique (240) fixée sur l'arbre ayant une surface externe et un ressort (242) pour pousser le piston plongeur (66) vers ladite surface externe de la came (240) moyennant quoi la rotation de la came provoque le mouvement de va-et-vient du piston plongeur.

15. Dispositif selon la revendication 2, comprenant en outre un bloc contenant la pompe et ayant une cavité définissant une boîte coulissante et une fourche (140) qui effectue un mouvement de va-et-vient dans la boîte coulissante (142) et entraîne le piston plongeur (66), la fourche ayant des surfaces coulissantes adaptées pour le contact coulissant avec les parois de la boîte coulissante.

16. Dispositif selon la revendication 2, comprenant en outre un bloc (70) contenant la pompe et ayant une cavité définissant une boîte coulissante, et une fourche (140) qui effectue un mouvement de va-et-vient dans la boîte coulissante et entraîne le piston plongeur (66), la fourche ayant des rouleaux (137) adaptés pour le contact roulant avec les parois de la boîte coulissante.

17. Dispositif selon l'une quelconque des revendications 1 à 15, comprenant en outre un circuit électrique (44) raccordé audit moteur électrique (30) et un coupe-circuit (98) positionné dans le circuit pour protéger le moteur des dommages.

18. Dispositif selon l'une quelconque des revendications 1 à 17, comprenant en outre ladite décharge qui comprend un tuyau flexible (26) et une poignée (38) de forme ergonomique pour la manipulation du tuyau.

19. Dispositif (20) selon l'une quelconque des revendications 1 à 18, dans lequel ledit dispositif comprend un pistolet de graissage pour distribuer du lubrifiant.

20. Procédé pour distribuer un fluide visqueux à une vitesse de décharge pouvant être sélectionnée, le procédé comprenant les étapes consistant à :
amener une alimentation dudit fluide visqueux à une pompe (22) avec un piston plongeur (66) effectuant un mouvement de va-et-vient pour pomper ledit fluide de ladite alimentation jusqu'à une sortie (74) ; **caractérisé par** les étapes consistant à :
actionner un moteur électrique (30) ayant une transmission à vitesse variable (32) à une première vitesse pour que le piston plongeur (66) effectue un mouvement de va-et-vient à une première fréquence cyclique pour distribuer ledit fluide à une première vitesse de décharge ;
changer un réglage de vitesse réglable sur la transmission à vitesse variable (32) ; et
actionner ledit moteur électrique (30) à une seconde vitesse pour que le piston plongeur effectue un mouvement de va-et-vient à une seconde fréquence cyclique pour distribuer ledit fluide à une seconde vitesse de décharge différente de ladite première vitesse.

21. Procédé pour distribuer un fluide visqueux selon la revendication 20, dans lequel ladite transmission (20) comprend une pluralité d'étages et à ladite première vitesse de décharge, un ou plusieurs étages de la transmission (32) sont actifs, et dans lequel ladite étape consistant à changer le réglage de vitesse réglable, active ou désactive un étage de sorte qu'à ladite seconde vitesse de décharge, un nombre d'étages de transmission différents sont actifs par rapport au premier réglage.
